# EUROPEAN PATENT APPLICATION

(11) **EP 4 793 154 A1**
(43) Date of publication of application: **19.08.2026**
(21) Application number: 26157706.8
(22) Date of filing: 10.02.2026
(51) Int. Cl.: B62J 35/00

(54) **FUEL TANK**

(30) Priority: 17.02.2025 JP 2025023084
(71) Applicant: Suzuki Motor Corporation, Hamamatsu-shi, Shizuoka 432-8611 (JP)
(72) Inventor: TOKUNAGA, Katsuhiko, Shizuoka, 432-8611 (JP); TANAKA, Hiroshi, Shizuoka, 432-8611 (JP); SATO, Toshihiko, Shizuoka, 432-8611 (JP)
(74) Representative: Haseltine Lake Kempner LLP

(57) **Abstract**

A fuel tank (40) for a saddle-type vehicle (1) equipped with an evaporative system, includes: a tank panel (41, 71, 81) in which a storage space (44) for liquid fuel is formed; an inlet pipe (46) attached to an upper part of the tank panel; a separator (51, 73) for separating gas and liquid, the separator being disposed within the tank panel; a breather pipe (57, 74, 82) for discharging fuel gas from within the separator; and a linear reinforcing member (61, 83) supported at both ends within the tank panel. The breather pipe extends from the separator through a lower part of the tank panel, and the linear reinforcing member extends along the breather pipe. A middle portion of the linear reinforcing member and a middle portion of the breather pipe are connected via a connecting bracket (62, 76).

## Description

### TECHNICAL FIELD

The present invention relates to a fuel tank.

### BACKGROUND ART

In an evaporative system of a saddle-type vehicle, fuel gas vaporized in a fuel tank is sent to a canister through a breather pipe. The canister is filled with an adsorbent made of activated carbon, and the fuel gas sent through the breather pipe is adsorbed by the canister. As an example of this type of evaporative system, there is known one that suppresses inflow of liquid fuel into a canister in order to prevent deterioration of the adsorbent (see, for example, Patent Literature 1). A separator for separating gas and liquid is provided in a fuel tank described in Patent Literature 1, and fuel gas separated from the liquid fuel by the separator is sent to a canister through a breather pipe.

### CITATION LIST

### PATENT LITERATURE

Patent Literature 1: JPH08-142959A

The separator is disposed inside the fuel tank described in Patent Literature 1 above a liquid level of the liquid fuel, and the breather pipe extends from a bottom surface of the separator to a bottom surface of the fuel tank. Because the breather pipe extends vertically through a storage space of the fuel tank, a middle portion of the breather pipe is susceptible to effects of vehicle body vibrations even when both ends of the breather pipe are fixed. In addition, an amount of overhang of an upper end of the breather pipe relative to a lower end becomes large, resulting in a large load being applied to both ends of the breather pipe.

### SMMARY

The present invention is made in consideration of the above-mentioned points, and has an object to provide a fuel tank that can suppress vibration of a breather pipe and reduce a load acting on both ends of the breather pipe.

A fuel tank according to an aspect of the present invention is a fuel tank for a saddle-type vehicle equipped with an evaporative system, the fuel tank including a tank panel in which a storage space for liquid fuel is formed, an inlet pipe attached to an upper part of the tank panel, a separator for separating gas and liquid, the separator being disposed within the tank panel, a breather pipe for discharging fuel gas from within the separator, and a linear reinforcing member supported at both ends within the tank panel, where the breather pipe extends from the separator through a lower part of the tank panel, and the linear reinforcing member extends along the breather pipe, and a middle portion of the linear reinforcing member and a middle portion of the breather pipe are connected via a connecting bracket.

According to the fuel tank of the aspect of the present invention, even when an upper end of the breather pipe overhangs a lower end thereof by a large amount, the breather pipe is supported by the linear reinforcing member via the connecting bracket, thereby reducing a load applied to both ends of the breather pipe. Furthermore, since the breather pipe is supported not only at both ends but also at the middle portion of the breather pipe by the linear reinforcing member, effects of vehicle body vibration can be suppressed even at points away from a fixed end of the breather pipe.

### BRIEF DESCRIPTION OF DRAWINGS

FIG. 1 is a left side view of a saddle-type vehicle according to an example.
FIG. 2 is a right side view of a fuel tank of the example.
FIG. 3 is a top view of the fuel tank of the example with an upper panel removed.
FIG. 4 is a bottom view of the fuel tank of the example with a lower panel removed.
FIG. 5 is a front view of the fuel tank of the example.
FIG. 6 is a cross-sectional view of a lower part of the fuel tank of the example.
FIG. 7 is a perspective view of the lower part of the fuel tank of the example.
FIG. 8 is a bottom view of a fuel tank of a first modification example with a lower panel removed.
FIG. 9 is a perspective view of a lower part of a fuel tank according to a second modification example, as viewed from below.

### DESCRIPTION OF EMBODIMENTS

A saddle-type vehicle according to an aspect of the present invention is equipped with an evaporative system. A storage space for liquid fuel is formed in a tank panel of a fuel tank of this saddle-type vehicle, and an inlet pipe is attached to the upper part of the tank panel. A separator for separating gas and liquid is installed inside the tank panel, and a breather pipe extends from the separator through a lower part of the tank panel so that fuel gas inside the separator is discharged through the breather pipe. A linear reinforcing member is supported at both ends within the tank panel, and extends along the breather pipe. A middle portion of the linear reinforcing member and a middle portion of the breather pipe are connected via a connecting bracket. Even when an upper end of the breather pipe overhangs a lower end thereof by a large amount, the breather pipe is supported by the linear reinforcing member via the connecting bracket, thereby reducing a load applied to both ends of the breather pipe. Furthermore, since the breather pipe is supported not only at both ends but also at the middle portion of the breather pipe by the linear reinforcing member, effects of vehicle body vibration can be suppressed even at points away from a fixed end of the breather pipe.

### Example

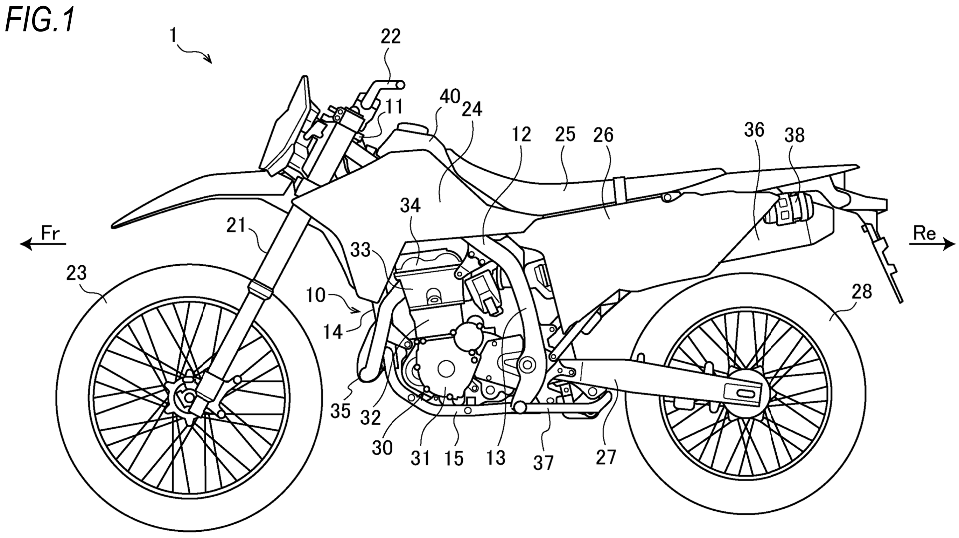

Hereinafter, the saddle-type vehicle according to this example will be described with reference to the accompanying drawings. FIG. 1 is a left side view of the saddle-type vehicle according to this example. In the following drawings, an arrow Fr indicates the front of the vehicle, an arrow Re indicates the rear of the vehicle, an arrow L indicates a left side of the vehicle, and an arrow R indicates a right side of the vehicle.

As illustrated in FIG. 1, a saddle-type vehicle 1 is configured by mounting an engine 30, an electrical system, and various other components on a vehicle body frame 10. A pair of main frames 12 extend obliquely downward and rearward from a head pipe 11 of the vehicle body frame 10, and rear portions of the pair of main frames 12 are bent downward to form a pair of body frames 13. A down frame 14 extends downward from the head pipe 11, and a pair of under loops 15 bent rearward are connected to a lower part of the down frame 14. Rear ends of the pair of under loops 15 are connected to lower parts of the pair of body frames 13, so that the vehicle body frame 10 is formed into a cradle shape.

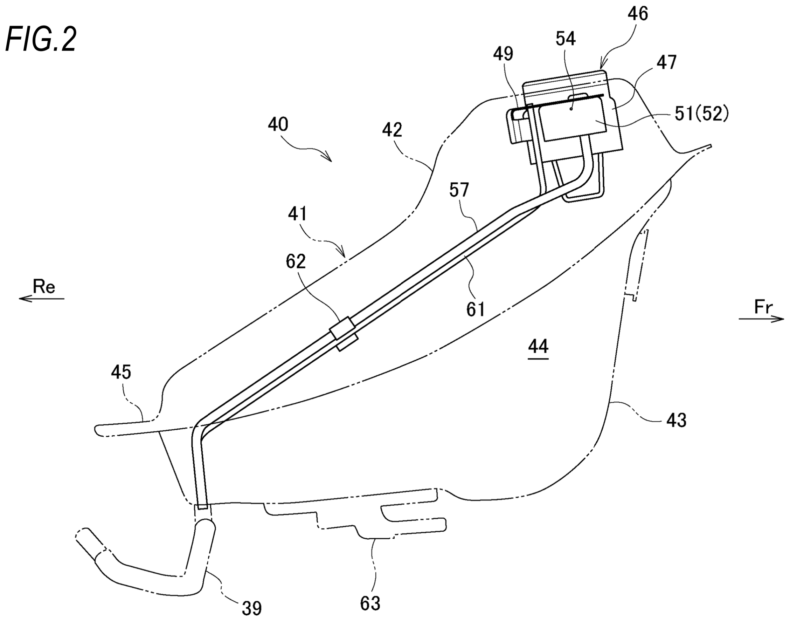

A front fork 21 is supported on the head pipe 11 via a steering shaft (not illustrated) so as to be steerable. A handlebar 22 is provided on an upper part of the front fork 21, and a front wheel 23 is rotatably supported on a lower part of the front fork 21. A fuel tank 40 (see FIG. 2) is placed on an upper part of the pair of main frames 12, and the main frames 12 and the fuel tank 40 are covered from the sides by front side covers 24. A seat 25 is provided behind the fuel tank 40, and a seat frame (not illustrated) that supports the seat 25 from below is covered from the sides by rear side covers 26.

A swing arm 27 is supported at a middle portion of the body frame 13 so as to be able to swing. The swing arm 27 extends rearward from the body frame 13, and a rear wheel 28 is rotatably supported at a rear end of the swing arm 27. A cylinder assembly, which is made up of a cylinder 32, a cylinder head 33, and a cylinder head cover 34 stacked together, is attached to an upper part of a crankcase 31 of the engine 30. An exhaust pipe 35 extends rearward from a front surface of the engine 30, passing along the side of the cylinder 32, and a muffler 36 of an up type is connected to a downstream end of the exhaust pipe 35. A side stand 37 is provided on the body frame 13 on the left side to support a vehicle body.

Additionally, a canister 38 that constitutes an evaporative system is exposed behind the rear side cover 26. The fuel tank 40 is connected to an upstream side of the canister 38 via a breather hose 39 (see FIG. 2), and an intake system is connected to a downstream side of the canister 38 via a breather hose (not illustrated). Fuel gas vaporized in the fuel tank 40 is sent to the canister 38 through the breather hose 39, and the fuel gas is adsorbed by adsorbent in the canister 38. When the engine is started, the fuel gas is separated from the adsorbent in the canister 38 and sent to the intake system of the engine 30 for re-burning.

In the saddle-type vehicle equipped with the evaporative system, the separator for separating gas and liquid is provided in the fuel tank. The separator is installed at the upper part of the tank so that the separator is not immersed in the liquid, and a breather pipe extends from the separator to the lower part of the tank. Because the breather pipe is extended long, rigidity of the breather pipe is reduced, making it more susceptible to the effects of vibration and causing bending stress to concentrate at an end of the pipe. Therefore, in this example, the breather pipe is reinforced with a linear reinforcing member provided along the breather pipe, thereby increasing the rigidity of the breather pipe and reducing stress concentration at the end of the pipe.

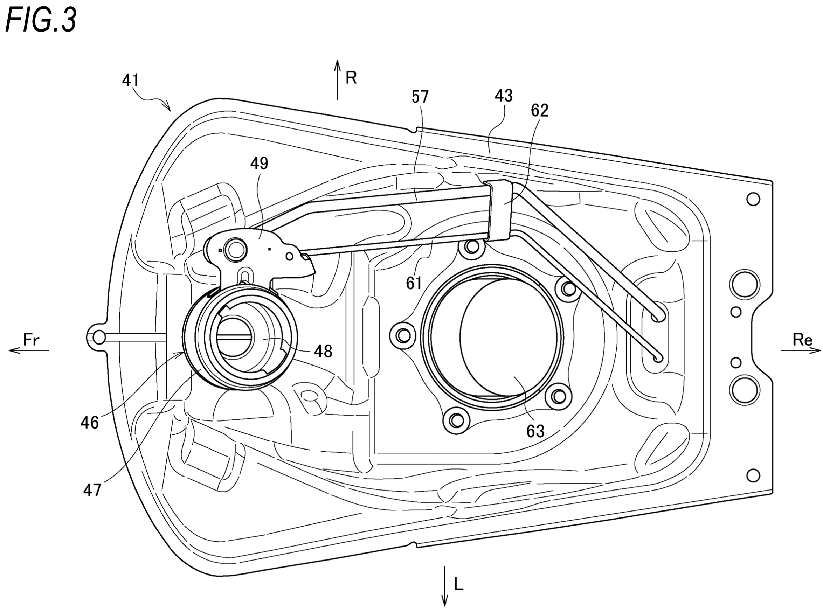

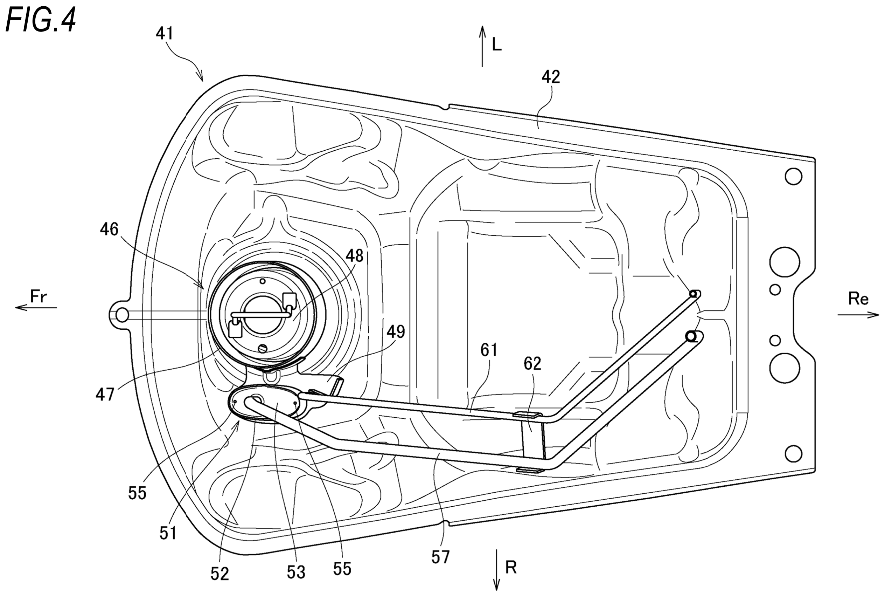

The fuel tank will be described with reference to FIGS. 2 to 4. FIG. 2 is a right side view of the fuel tank of this example. FIG. 3 is a top view of the fuel tank of this example with an upper panel removed. FIG. 4 is a bottom view of the fuel tank of this example with a lower panel removed. In FIG. 2, the upper panel and the lower panel are indicated by two-dot chain lines.

As illustrated in FIG. 2, a tank panel 41 of the fuel tank 40 is a two-piece type tank panel in which an upper panel 42 and a lower panel 43 are joined together. The upper panel 42 bulges upward in a dome shape, and the lower panel 43 bulges downward in a dome shape, with the upper panel 42 and the lower panel 43 forming a storage space 44 for liquid fuel. An outer edge of the upper panel 42 and an outer edge of the lower panel 43 are seam-welded, and a flange 45 is formed at a joint portion between the upper panel 42 and the lower panel 43. The tank panel 41 is formed so that a vertical dimension decreases from a front side to a rear side.

As illustrated in FIGS. 2 and 3, an inlet pipe 46 is attached to the upper part of the upper panel 42. The inlet pipe 46 has a double structure of an outer cylinder 47 and an inner cylinder 48, and the outer cylinder 47 and the inner cylinder 48 are combined to form the inlet pipe 46 into a cylindrical shape with a bottom. The outer cylinder 47 of the inlet pipe 46 is joined to an opening of the upper panel 42, and a tank cap (not illustrated) is attached to an upper part of the outer cylinder 47 of the inlet pipe 46. An inlet for liquid fuel is formed on a bottom surface of the inner cylinder 48 of the inlet pipe 46, and a nozzle (not illustrated) is inserted into the inlet pipe 46 to supply liquid fuel.

A separator 51 for separating gas and liquid is installed in the tank panel 41. A bracket 49 provided on an outer surface of the outer cylinder 47 of the inlet pipe 46 extends to the right, and the separator 51 having a small capacity is supported by a tip of the bracket 49. The separator 51 is formed in an elliptical cylindrical shape by joining a bottom plate 53 to an opening of a cylindrical case 52 having a lid. An upper wall of the cylindrical case 52 is joined to a lower surface of the bracket 49, and the separator 51 is suspended from the inlet pipe 46. A first breathing hole 54 is formed in a side wall of the cylindrical case 52, and a pair of second breathing holes 55 are formed in the bottom plate 53.

The first and second breathing holes 54 and 55 are small holes with a diameter of 1 mm, and air flows in and out of the separator 51 through the first and second breathing holes 54 and 55. In addition, since the pair of second breathing holes 55 are formed in the bottom plate 53, the liquid fuel in the separator 51 is returned to the storage space 44 through the pair of second breathing holes 55. The first and second breathing holes 54, 55 are formed with a smaller diameter than a breather pipe 57 described below, and provide sufficient airflow resistance for breathing function. Sudden pressure fluctuations within the fuel tank 40 are suppressed, the discharge of fuel gas within the fuel tank 40 is controlled, and excessive discharge of fuel gas into the breather pipe 57 is restricted.

As illustrated in FIGS. 2 to 4, the breather pipe 57 for discharging fuel gas from within the separator 51 is provided within the fuel tank 40. An upper end on an inlet side of the breather pipe 57 is connected to the bottom plate 53 of the separator 51, and a lower end on an outlet side of the breather pipe 57 is connected to a lower rear side of the lower panel 43. The breather pipe 57 extends from the separator 51 through a lower part of the lower panel 43 to the outside of the tank, thereby preventing the breather pipe 57 from being exposed to the outside, thereby improving the appearance of the fuel tank 40. A breather hose 39 leading to the canister 38 (see FIG. 1) is connected to the lower end of the breather pipe 57.

A linear reinforcing member 61 is provided within the fuel tank 40 along the breather pipe 57. The linear reinforcing member 61 is formed of a solid wire. An outer diameter of the linear reinforcing member 61 is approximately half an outer diameter of the breather pipe 57, so that the strength of the linear reinforcing member 61 is ensured while also reducing its weight. An upper end of the linear reinforcing member 61 is connected to the bracket 49, and a lower end of the linear reinforcing member 61 is connected to the lower rear side of the lower panel 43. The linear reinforcing member 61 and the breather pipe 57 are connected via a connecting bracket 62 having a plate shape, and the breather pipe 57 is stably supported by the linear reinforcing member 61, which has high rigidity.

A pump 63 of an in-tank type is provided on a bottom surface of the lower panel 43. The pump 63 is immersed in the liquid fuel and is cooled by the liquid fuel. The pump 63 is located in a center of the bottom surface of the lower panel 43, and the breather pipe 57 and the linear reinforcing member 61 pass to the right of the pump 63 and extend to the rear of the pump 63. Even when the pump 63 protrudes into the fuel tank 40, the pump 63 does not interfere with the breather pipe 57 and the linear reinforcing member 61. In addition, the breather pipe 57 and the linear reinforcing member 61 extend along a right side surface of the fuel tank 40, which improves the ease of attachment and detachment of the pump 63.

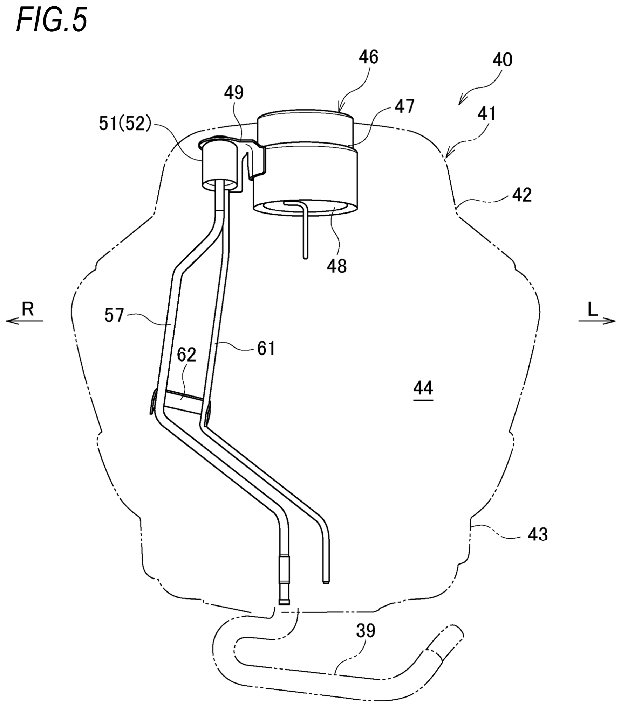

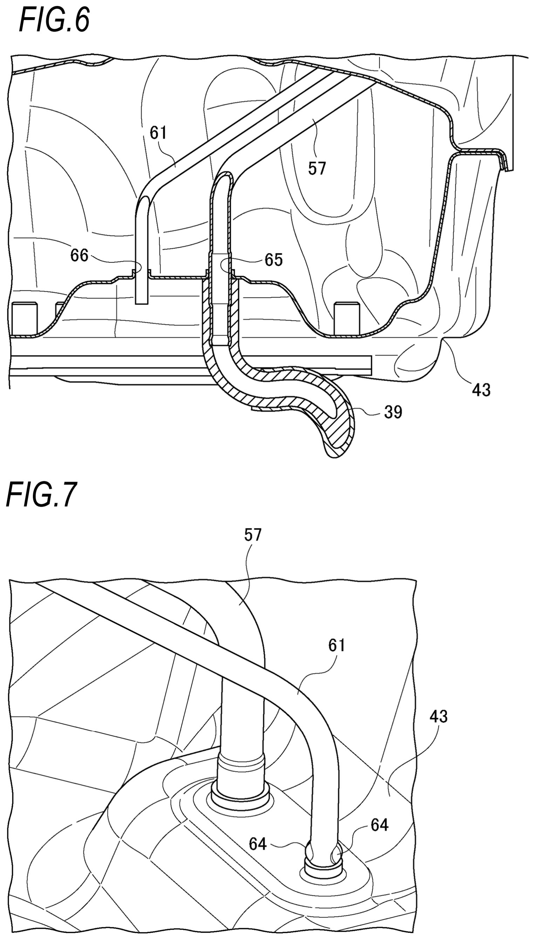

A support structure of the breather pipe using the linear reinforcing member will be described with reference to FIGS. 2 and 5 to 7. FIG. 5 is a front view of the fuel tank of this example. FIG. 6 is a cross-sectional view of a lower part of the fuel tank of this example. FIG. 7 is a perspective view of the lower part of the fuel tank of this example. In FIG. 5, the upper panel and the lower panel are indicated by two-dot chain lines.

As illustrated in FIGS. 2 and 5, an upper end of the breather pipe 57 is located forward of a lower end in a side view, and the upper end of the breather pipe 57 is located to the right of the lower end in a front view. Since the breather pipe 57 has a large overhang when viewed from the side and the front, bending stress is likely to concentrate at both ends of the breather pipe 57, and a middle portion of the breather pipe 57 is likely to be affected by vehicle body vibration. For this reason, the connecting bracket 62 having a plate shape is provided at a middle position in an extending direction of the linear reinforcing member 61, and a middle portion of the linear reinforcing member 61 and the middle portion of the breather pipe 57 are connected via the connecting bracket 62.

The linear reinforcing member 61 extends along the breather pipe 57, and the linear reinforcing member 61 and the breather pipe 57 are held by the connecting bracket 62 with a fixed gap between them. The linear reinforcing member 61 and the breather pipe 57 are integrated via the connecting bracket 62, thereby increasing the rigidity of the breather pipe 57. Deformation at both ends of the breather pipe 57 is suppressed, and bending stress occurring at both ends is mitigated. In addition, since the middle portion of the breather pipe 57 is restrained via the connecting bracket 62, an amplitude of the middle portion of the breather pipe 57 is suppressed, making it less susceptible to the effects of vehicle body vibration.

As described above, the upper end of the breather pipe 57 is connected to the separator 51, and the upper end of the linear reinforcing member 61 is connected to the bracket 49 near the separator 51. Further, the lower end of the breather pipe 57 and the lower end of the linear reinforcing member 61 are connected to the lower rear side of the lower panel 43. In side and front views, both ends of the breather pipe 57 and both ends of the linear reinforcing members 61 are brought close to each other, and the breather pipe 57 and the linear reinforcing member 61 are formed compactly and are resistant to deformation due to external forces. In addition, the breather pipe 57 is stably supported by the linear reinforcing member 61 having high rigidity.

As illustrated in FIG. 6, the lower part of the lower panel 43 bulges inward, and a through hole 65 for the breather pipe 57 and a through hole 66 for the linear reinforcing member 61 are formed in this bulging portion. The lower end of the breather pipe 57 protrudes to the outside of the lower panel 43 through the through hole 65, and the lower end of the linear reinforcing member 61 protrudes to the outside of the lower panel 43 through the through hole 66. The protruding portions of the breather pipe 57 and the linear reinforcing member 61 are located within the bulging portion of the lower panel 43, thereby preventing the protruding portions of the breather pipe 57 and the linear reinforcing member 61 from getting caught on other members.

An inner diameter of the through hole 66 for the linear reinforcing member 61 is smaller than an inner diameter of the through hole 65 for the breather pipe 57, and an outer diameter of the linear reinforcing member 61 is smaller than an outer diameter of the breather pipe 57. The linear reinforcing member 61 is not erroneously inserted into the through hole 65 for the breather pipe 57, and the breather pipe 57 is not erroneously inserted into the through hole 66 for the linear reinforcing member 61. This prevents the linear reinforcing member 61 from being assembled incorrectly to the lower panel 43. In addition, since the inner diameter of the breather hose 39 is formed to match the outer diameter of the breather pipe 57, the breather hose 39 will not be attached to the linear reinforcing member 61 incorrectly.

As illustrated in FIG. 7, the linear reinforcing member 61 is formed as a solid body, and a stopper 64 is formed by crushing a part of a side surface of the linear reinforcing member 61. When the lower end of the linear reinforcing member 61 is inserted into the through hole 66 of the lower panel 43, the stopper 64 of the linear reinforcing member 61 abuts against an inner surface of the lower panel 43, regulating an insertion amount of the lower end of the linear reinforcing member 61 into the through hole 66 of the lower panel 43. Since the linear reinforcing member 61 and the breather pipe 57 are integrated via the connecting bracket 62, the protrusion of the breather pipe 57 can be appropriately adjusted by regulating the insertion amount of the linear reinforcing member 61.

As described above, with the fuel tank 40 of this example, even when an overhang amount of the upper end of the breather pipe 57 relative to the lower end is large, the breather pipe 57 is supported by the linear reinforcing member 61 via the connecting bracket 62, so that the load applied to both ends of the breather pipe 57 is reduced. Furthermore, since the breather pipe 57 is supported not only at both ends but also at the middle portion of the breather pipe 57 by the linear reinforcing member 61, the effects of vehicle body vibration can be suppressed even at points away from the fixed end of the breather pipe 57.

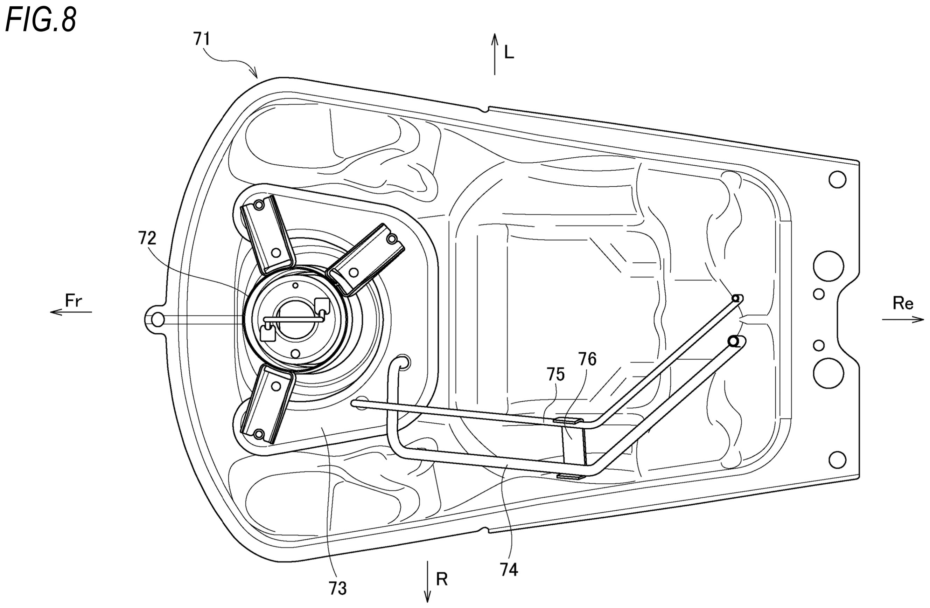

In this example, the upper end of the breather pipe is connected to the separator and the upper end of the linear reinforcing member is connected to the bracket, but both the upper end of the breather pipe and the upper end of the linear reinforcing member may be connected to the separator. For example, as illustrated in a first modification example in FIG. 8, an inlet pipe 72 is attached to an upper part of a tank panel 71, and a separator 73 having a U shape is provided so as to surround the inlet pipe 72. The separator 73 is large, and an upper end of a breather pipe 74 and an upper end of a linear reinforcing member 75 are connected to a rear bottom surface of the separator 73. The linear reinforcing member 75 extends along the breather pipe 74, and a middle portion of the breather pipe 74 and a middle portion of the linear reinforcing member 75 are integrated via a connecting bracket 76. Even in a configuration of the first modification example using such a large separator 73, the load applied to both ends of the breather pipe 74 is reduced, and the effects of vehicle body vibration are also suppressed.

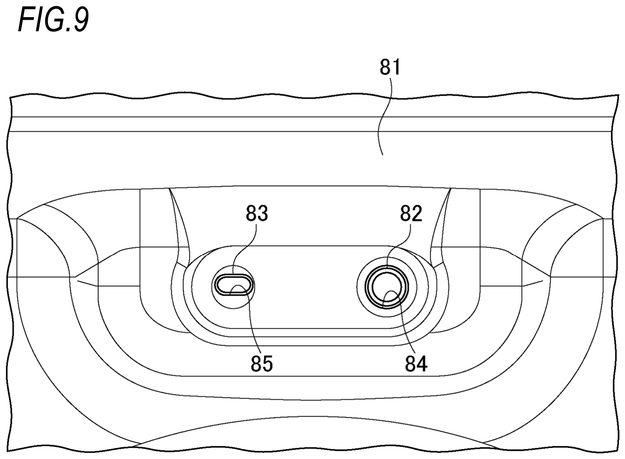

In addition, in this example, a cross-sectional shape of a lower end of the linear reinforcing member and a cross-sectional shape of the lower end of the breather pipe are formed in a circular shape, but the cross-sectional shape of the lower end of the linear reinforcing member and the cross-sectional shape of the lower end of the breather pipe may be different. For example, as illustrated in a second modification example of FIG. 9, a through hole 84 having a circular shape for a breather pipe 82 and a through hole 85 having an elliptical shape for a linear reinforcing member 83 are formed in a lower part of a tank panel 81. Since a cross-sectional shape of a lower end of the breather pipe 82 is circular, a lower end of the breather pipe 82 will not be erroneously inserted into the through hole 85 having an elliptical shape for the linear reinforcing member 83. Since the cross-sectional shape of the lower end of the linear reinforcing member 83 is elliptical, the lower end of the linear reinforcing member 83 will not be erroneously inserted into the through hole 84 having a circular shape for the breather pipe 82. This prevents the linear reinforcing member 83 from being assembled incorrectly to the tank panel 81, and also prevents the breather hose from being attached incorrectly to the linear reinforcing member 83. A cross-sectional shape of the other end of the linear reinforcing member 83 is elliptical, but a cross-sectional shape above this other end is circular, and a step is formed at a boundary between the elliptical cross-sectional portion and the circular cross-sectional portion of the linear reinforcing member 83. The step of the linear reinforcing member 83 regulates an insertion amount of the lower end of the linear reinforcing member 83 into the through hole 85, and the protrusion of the breather pipe 82 integrated with the linear reinforcing member 83 is appropriately adjusted. Furthermore, since the linear reinforcing member 83 is formed from a pipe material, an elliptical cross-sectional shape can be easily formed by crushing the lower end of the linear reinforcing member 83.

In addition, in this example, the separator is formed in an elliptical cylindrical shape, but the shape and size of the separator are not particularly limited as long as the separator is capable of separating gas and liquid within the tank panel.

In addition, in this example, the upper end of the linear reinforcing member is connected to the bracket and the lower end of the linear reinforcing member is connected to a lower rear side of the lower panel, but it is sufficient when the linear reinforcing member is supported at both ends within the tank panel. For example, the upper end of the linear reinforcing member may be connected to the upper panel, and the lower end of the linear reinforcing member may be connected to the lower panel.

Further, in this example, the linear reinforcing member extends along the breather pipe, but the present invention is not limited to a configuration in which the linear reinforcing member extends parallel to the breather pipe. The linear reinforcing member extending along the breather pipe also includes a configuration in which the linear reinforcing member extends generally along the breather pipe.

In addition, in this example, the connecting bracket is formed in a plate shape, but the shape of the connecting bracket is not particularly limited. The connecting bracket only needs to be formed so as to be able to connect the middle portion of the linear reinforcing member and the middle portion of the breather pipe.

In addition, in this example, the outer diameter of the linear reinforcing member is smaller than the outer diameter of the breather pipe, but the outer diameter of the linear reinforcing member may be larger than the outer diameter of the breather pipe.

Furthermore, the fuel tank of this example is not limited to the above-mentioned saddle-type vehicle, but may be used in other types of saddle-type vehicles. The saddle-type vehicle is not limited to all vehicles in which a rider sits astride a seat, but also includes scooter-type vehicles in which a rider does not sit astride a seat.

As described above, a first aspect is a fuel tank (40) for a saddle-type vehicle (1) equipped with an evaporative system, the fuel tank including a tank panel (41, 71, 81) in which a storage space (44) for liquid fuel is formed, an inlet pipe (46) attached to an upper part of the tank panel, a separator (51, 73) for separating gas and liquid, the separator being disposed within the tank panel, a breather pipe (57, 74, 82) for discharging fuel gas from within the separator, and a linear reinforcing member (61, 83) supported at both ends within the tank panel, where the breather pipe extends from the separator through a lower part of the tank panel, and the linear reinforcing member extends along the breather pipe, and a middle portion of the linear reinforcing member and a middle portion of the breather pipe are connected via a connecting bracket (62, 76). With this configuration, even when an upper end of the breather pipe overhangs a lower end thereof by a large amount, the breather pipe is supported by the linear reinforcing member via the connecting bracket, thereby reducing a load applied to both ends of the breather pipe. Furthermore, since the breather pipe is supported not only at both ends but also at the middle portion of the breather pipe by the linear reinforcing member, effects of vehicle body vibration can be suppressed even at points away from a fixed end of the breather pipe.

In a second aspect, in the first aspect, the separator is supported by the inlet pipe via a bracket (49), and an upper end of the linear reinforcing member is connected to the bracket, and a lower end of the linear reinforcing member is connected to the lower part of the tank panel. According to this configuration, both ends of the linear reinforcing member and both ends of the breather pipe are brought close to each other, so that the breather pipe and the linear reinforcing member are formed compactly and are resistant to deformation due to external forces.

In a third aspect, in the first or second aspect, the linear reinforcing member is formed of a solid wire. According to this configuration, the strength of the linear reinforcing member is increased, and the breather pipe is stably supported.

In a fourth aspect, in the third aspect, a through hole (66) is formed in the lower part of the tank panel, and a stopper (64) is formed by crushing a part of the linear reinforcing member, and the stopper regulates an insertion amount of a lower end of the linear reinforcing member into the through hole. According to this configuration, when the lower end of the linear reinforcing member is inserted into the through hole of the tank panel, the stopper of the linear reinforcing member abuts against the inner surface of the tank panel, thereby restricting the insertion amount. Since the linear reinforcing member and the breather pipe are integrated via the connecting bracket, the protrusion of the breather pipe can be appropriately adjusted by regulating the insertion amount of the linear reinforcing member.

In a fifth aspect, in any one of the first to fourth aspects, a through hole is formed in the lower part of the tank panel, and a lower end of the linear reinforcing member protrudes to an outside of the tank panel through the through hole, and an outer diameter of the linear reinforcing member is different from an outer diameter of the breather pipe. According to this configuration, the linear reinforcing member is not erroneously inserted into the through hole for the breather pipe, and therefore, it is possible to prevent the linear reinforcing member from being assembled incorrectly with respect to the tank panel. In addition, since the inner diameter of the breather hose is formed to match the outer diameter of the breather pipe, incorrect attachment of the breather hose to the linear reinforcing member is prevented.

In a sixth aspect, in any one of the first to fourth aspects, a through hole (85) is formed in the lower part of the tank panel, and a lower end of the linear reinforcing member (83) protrudes to an outside of the tank panel (81) through the through hole, and a cross-sectional shape of the lower end of the linear reinforcing member is different from a cross-sectional shape of the breather pipe (82). According to this configuration, it is possible to prevent the linear reinforcing member from being assembled incorrectly to the tank panel, and also to prevent the breather hose from being attached incorrectly to the linear reinforcing member.

In a seventh aspect, in the sixth aspect, the cross-sectional shape of the lower end of the linear reinforcing member is elliptical, and the cross-sectional shape of the breather pipe is circular, and a cross-sectional shape of a portion above the lower end of the linear reinforcing member is circular, and a step is formed at a boundary between an elliptical cross-sectional portion and a circular cross-sectional portion of the linear reinforcing member. According to this configuration, it is possible to prevent the linear reinforcing member from being assembled incorrectly to the tank panel, and also to prevent the breather hose from being attached incorrectly to the linear reinforcing member. Furthermore, the step of the linear reinforcing member regulates an insertion amount of the lower end of the linear reinforcing member into the through hole, and the protrusion of the breather pipe integrated with the linear reinforcing member is appropriately adjusted.

Although the present example is described, other examples may be made by combining the above-described examples and modification examples in whole or in part.

Furthermore, the technology of the present invention is not limited to the above-described examples, and may be modified, substituted, or changed in various ways without departing from the spirit and scope of the technical concept. Furthermore, when technological advances or derived technologies allow the technical ideas to be realized in a different way, they may be implemented using that method. Therefore, the claims cover all embodiments that may fall within the scope of the technical concept.

### REFERENCE SIGNS LIST

1: saddle-type vehicle
39: breather hose
40: fuel tank
44: storage space
49: bracket
64: stopper
46, 72: inlet pipe
51, 73: separator
61, 75, 83: linear reinforcing member
66, 85: through hole
41, 71, 81: tank panel
57, 74, 82: breather pipe
62, 76: connecting bracket

## Claims

1. A fuel tank (40) for a saddle-type vehicle (1) equipped with an evaporative system, comprising:
a tank panel (41, 71, 81) in which a storage space (44) for liquid fuel is formed;
an inlet pipe (46) attached to an upper part of the tank panel;
a separator (51, 73) for separating gas and liquid, the separator being disposed within the tank panel;
a breather pipe (57, 74, 82) for discharging fuel gas from within the separator; and
a linear reinforcing member (61, 83) supported at both ends within the tank panel,
wherein
the breather pipe extends from the separator through a lower part of the tank panel, and the linear reinforcing member extends along the breather pipe, and
a middle portion of the linear reinforcing member and a middle portion of the breather pipe are connected via a connecting bracket (62, 76).

2. The fuel tank according to claim 1, wherein
the separator is supported by the inlet pipe via a bracket, and
an upper end of the linear reinforcing member is connected to the bracket, and a lower end of the linear reinforcing member is connected to the lower part of the tank panel.

3. The fuel tank according to claim 1 or 2, wherein the linear reinforcing member is formed of a solid wire.

4. The fuel tank according to claim 3, wherein
a through hole is formed in the lower part of the tank panel, and a stopper is formed by crushing a part of the linear reinforcing member, and
the stopper regulates an insertion amount of a lower end of the linear reinforcing member into the through hole.

5. The fuel tank according to claim 1 or 2, wherein
a through hole is formed in the lower part of the tank panel, and a lower end of the linear reinforcing member protrudes to an outside of the tank panel through the through hole, and
an outer diameter of the linear reinforcing member is different from an outer diameter of the breather pipe.

6. The fuel tank according to claim 1 or 2, wherein
a through hole is formed in the lower part of the tank panel, and a lower end of the linear reinforcing member protrudes to an outside of the tank panel through the through hole, and
a cross-sectional shape of the lower end of the linear reinforcing member is different from a cross-sectional shape of the breather pipe.

7. The fuel tank according to claim 6, wherein
the cross-sectional shape of the lower end of the linear reinforcing member is elliptical, and the cross-sectional shape of the breather pipe is circular, and
a cross-sectional shape of a portion above the lower end of the linear reinforcing member is circular, and a step is formed at a boundary between an elliptical cross-sectional portion and a circular cross-sectional portion of the linear reinforcing member.
